# EUROPEAN PATENT APPLICATION

(11) **EP 4 738 097 A1**
(43) Date of publication of application: **06.05.2026**
(21) Application number: 24925136.4
(22) Date of filing: 05.09.2024
(51) Int. Cl.: G06F 8/20

(54) **DRIVING ASSEMBLY, METHOD AND SYSTEM FOR MULTI-PERIOD MODULATION, AND PRODUCT**

(71) Applicant: Nanjing VPS Semiconductor Technology Co., Ltd., Nanjing, Jiangsu 211100 (CN)
(72) Inventor: SUN, Yanwen, Nanjing, Jiangsu 211100 (CN); WANG, Wenzhu, Nanjing, Jiangsu 211100 (CN)
(74) Representative: EIP
(86) International application number: PCT/CN2024/117050
(87) International publication number: WO 2026/050961

(57) **Abstract**

The present invention presents a driving component, method, system, and product for multi-period modulation. Utilizing for example SDN technology to decouple the control plane from the hardware, the remote controller may realize the data configuration of storage units and programming of circuit logic devices of different devices based on the controlled device code, provide multiple periodic/non-periodic timing driving signals required by a variety of device chips, and be compatible with the timing requirements of the driving and data readout of different device chip arrays. The driving component for multi-period modulation includes a state division component, a synchronization multi-period configuration component and a single-period modulation component. The state division component is used for functional decoding according to the function mode of the device, and generating timing-matched trigger signals according to the specific function mode; the synchronous multi-period configuration component is used to generate multiple types of periodic/non-periodic enable signals at different main frequencies according to the configuration information, so as to realize multi-period timing driving; the single-period modulation component may be used as a general modulation unit, and each unit may generate periodic composite on-chip timing driving signals according to the configuration information and multi-period driving signal, thereby meeting the driving needs of digital and analog readout units of different device chips. The proposed invention can greatly simplify the overall timing structure of the driving chip, through the use of programmable interconnected sub-module arrays which are generated in software, the remote controller may realize output of the multi-period modulation driving signal in batch, without additional customized design to meet the flexible configuration and real-time switching needs of periodic and non-periodic driving signals by the different devices in multiple modes. This reduces design complexity, and each module subunit may be configured off-chip with individual timing, which improves the fault tolerance and flexibility of chip timing design, while the reusability of multiple modules shortens the design period.

## Description

### TECHNICAL FIELD

The present invention proposes a driving component, a driving method, a driving system, and a product for multi-period modulation, which belongs to the field of digital integrated circuits.

### BACKGROUND

As for a current device chip with complicated functions, there is an inevitable driving need for the multi-period complex timing. This makes a high requirement for the timing docking between a front module and a rear module in the hardware circuit, and as for the mode which needs a work flow, the timing will be more complex; therefore, it is often necessary to design a complex driving circuit for multi-period timing, used as a driving for the digital and analog readout in sequential rows and columns, so as to meet the driving and readout requirements for the device chip with complicated functions.

Currently the mainstream driving and readout circuit design solution for the device chip employs a top-down design method, that is, first planning the top-level timing requirements, and then based on the timing designing the front and rear circuits. The solution needs to first determine the array driving circuit and readout circuit hardware structure of the overall chip and then design the timing, and finally design the control logic to generate the timing. The circuit usually uses a complex counter module, and outputs the driving signal which meets the driving needs of the chip through the off-chip triggering of the work signal and timing configuration information. This solution has a complex on-chip circuit design, a large area, and a long design period, which is often customized for special driving needs. Timing adjustments are all fine-tuning of the state duration, which cannot change the overall driving timing, and the waveform has a low degree of adjustable flexibility, and the manpower and docking costs of subsequent verification are very high.

### SUMMARY

The present invention proposes a driving component, a driving method, a driving system, and a product for multi-period modulation, which decouples a control plane from the hardware by utilizing for example Software-Defined Networking (SDN) technology, so that a remote controller may realize data configuration of storage units and programming of circuit logic devices for different controlled devices based on a device code, and provide a variety of periodic/non-periodic timing driving signals required by multiple types of controlled device chips, which is compatible with the timing requirements of the array driving and data readout of different device chips. Using the programmable interconnected sub-module arrays which are generated in software, the remote controller may realize the output of multi-period modulation driving signals in batch, without any additional individual customized design for meeting the needs of flexible configuration and real-time switching for periodic and non-periodic driving signals of different devices in multiple modes, so as to reduce the complexity of the design and costs of design and validation, and to realize the flexible configuration of driving signals in multiple modes of multiple devices. The driving component, driving method, driving system and product also provide driving solutions for current satellite device programming and cloud device control on the basis of meeting the driving requirements of different device chips. By converting digital driving signals into control signals, the microprocessors and microcontrollers of different devices may drive various functions of electronic devices, such as controlling mechanical movements, processing data, and managing communications.

The technical solution adopted for the circuit of the present invention is as follows:
A driving component for multi-period modulation and a driving method thereof, characterized in that a control plane is separated from a hardware using for example SDN technology, and a logically centralized remote controller is used to configure parameters of a numerical control circuit for a multi-period modulation driving based on device code information through a communication data interface between the control level and a hardware level implemented by for example a protocol such as OpenFlow. The driving component also feeds data back to a controller side in real time via a data feedback link, enabling a flexible and efficient configuration of the hardware circuits. The programmable interconnected sub-module array circuit which is generated in software includes a state division component, a synchronization multi-period configuration component, and a single-period modulation component connected in sequence; the state division component is used to functionally decode according to a function mode, and generate a trigger signal that meets timing requirements based on a specific function mode; the synchronization multi-period configuration component is used to generate multiple types of periodic/non-periodic enable signals at different main frequencies of a clock according to configuration information, so as to realize a multi-period timing driving; the single-period modulation component is used as a general modulation unit, and each unit may generate a periodic compound on-chip timing driving signal according to the configuration information and the multi-period driving signal, so as to meet the driving requirements of different device chips.

Further, the remote controller may be a host computer or a cloud device. The driving component for multi-period modulation based on SDN technology abstract the underlying hardware devices into a virtualized resource pool, so that the control is no longer tightly coupled to the hardware. Hardware technicians use a remote controller to reorganize data flows and data packets through the matching of communication data interfaces between the control level and the hardware level based on the protocols for example, OpenFlow, Serial Peripheral Interface (SPI), and Inter-Integrated Circuit (I2C), so that the feedback link adjusts the data packets and transmits them after receiving the information, thereby realizing the data configuration of storage units and the programming of circuit logic devices for different controlled devices.
Further, the state division component, which is at least adapted to one digital input signal and one digital output signal, is used to perform functional decoding according to the function mode of the device chip, and generate a timing-matched trigger signal according to a specific function mode; wherein the one digital input signal is the data configuration information Config_Data1, which includes working mode information of the chip and configuration parameters in different function modes, and the working mode information of the chip includes a request information TriggerBegin requesting the controlled device to start up; and the configuration parameters in different function modes may include for example at least one of the state durations of a reset state, an exposure state, a readout state, and a program state; and the one digital output signal is a timing-matched trigger signal MatchTriggerBegin to be transmitted to the synchronization multi-period configuration component;
Further, the state division component includes a mode judgment logic module and a trigger delay module. The mode judgment logic module ModeJudge_Logic performs a combinational logic judgment and configures for example a delay storage unit MatchNum based on data configuration information Config_Data1; the trigger delay module TriggerDelay realizes the modulation of delay time of a period enable driving signal and a trigger signal from the outside in different function modes based on the configuration information of the delay storage unit and the request information TriggerBegin requesting the controlled device to start up, and output the timing-matched trigger signal MatchTriggerBegin to the synchronous multi-period configuration component;
Further, the synchronization multi-period configuration component, which is adapted to two digital input signals and two digital output signals, is used to generate multiple types of periodic/non-periodic enable signals at different clock frequencies based on the off-chip configuration information, and realize the multi-period timing driving in the chip at the same time; wherein the two digital input signals are the trigger signal MatchTriggerBegin from the state division component and the data configuration information Config_Data2 respectively, and the two digital output signals are a set of one-dimensional array driving enable signal PeriodValid and one-dimensional array end signal ModeEnd that can characterize the multiple types of periods of the chip. The driving enable signal PeriodValid and the end signal ModeEnd are prioritized to be one-dimensional array signals, but this does not constitute a limitation. In fact, the driving enable signal PeriodValid and end signal ModeEnd may for example also be two-dimensional arrays in order to combine a plurality of relevant data for input, output and processing.

Further, the synchronization multi-period configuration component, which includes a decoding module, k clock reset generation sub-modules, and k configuration sub-modules, implements multi-period enable modulation under the same clock frequency group, wherein k is the number of enable signals to be generated and k is a positive integer. The remote controller may exemplify a plurality of synchronization multi-period configuration components, each of which may operate independently of the other, via data communication. The plurality of synchronization multi-period configuration components may enable generation of driving signals at different frequency groups, such as a frequency group of Hz, a frequency group of KHz, etc. In one synchronous multi-period configuration component, the decoding module performs the decoding and outputting the result to an internal sub-module based on its data configuration information Config_Data2, to configure data and perform a selection for the sub-module, and the sub-module which is not selected is in a standby state, and the internal k sub-modules realize the generation of the driving signals at different main frequencies under the same frequency group; the clock reset generation sub-module provides stable and reliable clock signals and synchronous reset signals of different frequencies for the configuration sub-module and the single-period modulation component under the same clock frequency group, so as to ensure that each module operates at a specific main frequency; the configuration sub-module, based on its data configuration information Config_Data2, performs a combinational logic judgment and configures the corresponding storage units PeriodNum, EnableNum and RepeatNum, realizes the timing configuration of the periodic and non-periodic driving signals via the counters PeriodCounter and RepeatCounter, realizes the timing configuration of the periodic and non-periodic driving signals at a specific clock frequency, and outputs the multi-period driving enable signal PeriodValid and end signal ModeEnd of the single-period modulation component.

Further, the single-period modulation component, adapted to at least four digital input signals and at least one digital output signal, is used as a modulation unit, and each modulation unit generates a periodic composite on-chip timing driving signal based on the off-chip signal type code and the configuration information as well as the multi-period driving enable signal and end signal, thereby driving all subsequent digital and analog readout units; the four digital input signals are a signal type code Config_Type, a timing data configuration information Config_Data3 of the corresponding signal, a driving enable signal PeriodValid and an end signal ModeEnd respectively, and one digital output signal is a complex on-chip timing driving signal DriverSignal required for the chip's digital and analog readout units;
Further, the single-period modulation component includes n driving sub-modules, which is responsible for generating a plurality of complex on-chip timing driving signals, wherein n is the number of driving signals to be generated, and n is a positive integer; the driving sub-modules, based on the input signal type code Config_Type, determine the type of the driving signal and the number of high and low levels flip through the combinational logic, and start working after receiving the input driving enable signal PeriodValid and generate the driving signal DriverSignal through the modulation by the state machine sub-module. The output of the modulation driving signal DriverSignal or the direct output of the enable signal PeriodValid is realized through a selector according to the device code DeviceType in the data configuration information.

A variety of storage units are used in the solution of the present invention, such as a time delay storage unit, an enable signal period storage unit, a high level duration storage unit in a single period, and a single-period repetition number storage unit and so on. The storage units involved herein may be general-purpose storage units, and the preferred solution uses registers. This is confirmed by the product of the present invention during the research and simulation phase.

The word composite as it appears in the composite on-chip timing driving signal, composite timing, composite multi-period driving signals and the like involved in the solution of the present invention refers to both a plurality of parallel timing signals as well as a required plurality of compound driving signals, and also refers to complicated timing patterns and signal waveforms of a single timing signal.

The present invention also provides a driving method of a driving component using the above-described multi-period modulation, the driving method including for example the following steps:
S1, performing data configuration writing, a hardware technicians may send instructions to a network device through a programming language; a remote controller, after receiving the instructions, selects storage unit configuration information based on the device code information; the controller realizes data communication with the hardware circuit through protocols such as OpenFlow and so on and adjusts the data transmission based on the information received by the feedback link, and realizes the storage unit data configuration and circuit logic device programming of the numerical control circuits with the multi-period modulation driving for different devices.
S2, performing function state division: the state division component receives data configuration information Config_Data1 containing the target device working mode code and corresponding function mode timing; the mode judgment logic module is set to configure the delay storage unit MatchNum; the trigger delay module is set to start working under the trigger by the request information TriggerBegin signal requesting the controlled device to start up from the outside, and when its built-in counter counts up to MatchNum, it outputs a timing-matched trigger signal, MatchTriggerBegin signal, with the high level of the signal lasting for at least one clock period.
S3, performing a configuration of a multi-period enable signal; the remote controller may exemplify a plurality of synchronous multi-period configuration components via data communication. After receiving data configuration information Config_Data2 containing the sub-module selection signal, the main frequency selection signal, the working state code information, the timing configuration information and the drive switching enable, the synchronous multi-period configuration component performs selection and data configuration for the sub-module via a combinational logic decoder, and the sub-module which is not selected is in a standby state. The clock reset generation sub-module selects a working main frequency based on the data configuration information, provides stable and reliable synchronization reset signals and clock signals of different frequenciesfor the configuration sub-module and the single-period modulation component, and ensures that each module operates under a specific main frequency. The configuration sub-module, based on the data configuration information, determines and configures the period storage unit PeriodNum of the enabling signal, the high level duration storage unit EnableNum in a single period, and the single-period repetition number storage unit RepeatNum by means of a combinational logic; the k sub-modules exemplified by the synchronous multi-period configuration component begins to work after receiving a timing-matched trigger signal MatchTriggerBegin, the counter PeriodCounter starts counting, and outputs the enable signal PeriodValid with a duration of a single period which is PeriodNum and a duration of a high level in a period which is EnableNum; the counter RepeatCounter outputs the mode end signal ModeEnd after it counts the number of single-period repetitions of the enable signal up to EnableNum, which simultaneously realizes the multi-period driving enable for subsequent k single-period modulation sub-modules in the chip.
S4, performing a generation of the modulation signal with the single period; the single-period modulation component receives the off-chip configuration information Config_Type and Config_Data3, determines the type of the driving signal and the timing information by the combinational logic, and configures the corresponding storage unit. The n sub-modules examplified by the single-period modulation component work under the same driving enable signal PeriodValid, each working when the driving enable signal PeriodValid is at a high level, and the built-in counter and sub-state machine modulate PeriodValid into n periodic complex on-chip timing driving signals DriverSignal. Based on the device code DeviceType in the data configuration information, the module realizes the output of the modulated driving signal DriverSignal or the direct output of the enable signal PeriodValid by means of a selector, and finally realizes the timing driving of the digital and analog readout units of the whole chip.

The present invention proposes a driving component for multi-period modulation and a driving method thereof. Specifically, for example SDN technology is utilized to decouple the control plane from the hardware, and the remote controller realizes the data configuration of storage units and the programming of circuit logic devices of different controlled devices based on the device code, and the remote controller may realize the output of the multi-period modulation driving signals in batch by utilizing the programmable interconnected sub-module arrays which are generated in software. The numerical control circuit decouples the original on-chip complex driving signal generation module and divides it into three hardware components, i.e., a status division component (StatusDivision), a synchronization multi-period configuration component (ConfigureBlock) and a single-period modulation component (ModulateBlock), and through the division of hardware functions and software programming, each module is flexible and adjustable, and may be combined to realize the flexible configuration and switching of periodic/non-periodic driving signals of different device chips, so as to satisfy the demand for the complex drive of digital and analog readout units in multiple modes of multiple devices. Since the three hardware components may each realize the function configuration and hardware circuit programming according to the data configuration of the remote controller, the driving module may be designed in advance without determining the timing in advance, compatible with the timing requirements of different device chip array driving and data readout. The synchronous multi-period configuration component and single-period modulation component have low hardware complexity, and exemplification of the sub-modules may be repeated internally in batch, which greatly reduces the complexity of the driving module. Subsequent circuit design, circuit verification, and back-end design may all employ the batch operation manner, thereby greatly reducing the cost of design and verification. Accordingly, the driving method of the present invention includes data configuration writing, function state division, synchronization multi-period enable configuration, and single-period drive configuration, which may flexibly and efficiently configure the complex driving signal timing.

In conclusion, the present invention, based on the design of SDN technology, can provide the flexible and reliable digital driving for different device chips through the data configuration of remote controllers, which improves the fault tolerance and flexibility of the chip timing design; compared with the traditional solution, the present invention, through the flexibility and adjustability of the off-chip and multi-module reusability, shortens the design period while satisfying the complex driving requirements, and at the same time, it is less difficult to design and verify the chip; by converting digital driving signals into control signals, microprocessors and microcontrollers of different devices may drive various functions of electronic devices, such as controlling mechanical movements, processing data, and managing communications. Also based on the programmable nature and flexible configuration of data of this numerical control circuit, it provides a driving solution for current satellite device programming and cloud device control.

According to yet another aspect of the present invention, the present invention also discloses a system for a plurality of multi-period, multi-timing work processes which includes various types of driving components for multi-period modulation as described herein for generating a composite, multi-period, driving signal for a plurality of controlled devices that are controlled by the system.

### BRIEF DESCRIPTION OF DRAWINGS

FIG. 1 is a block diagram of a numerical control circuit of a driving component for multi-period modulation in an embodiment of the present invention;
FIG. 2 is a block diagram of a functional configuration and hardware circuit programming of a driving component for multi-period modulation in an embodiment of the present invention;
FIG. 3 is a flowchart of a driving method of the driving component for multi-period modulation in an embodiment of the present invention;
FIG. 4 is a timing diagram of a synchronization multi-period enable configuration in an embodiment of the present invention;
FIG. 5 is a truth table (in 4bits for example) of the modulation of the driving signal within a single period in an embodiment of the present invention;
FIG. 6 is a state timing diagram of a sub-state machine of a single-period modulation component in an embodiment of the present invention;
FIG. 7 is a timing diagram of the timing modulation within a single period and periodic/non-periodic driving signal switching in an embodiment of the present invention;
FIG. 8 is a driving system for multi-period modulation disclosed in the present invention.
FIG. 9 is a driving program for the multi-period modulation disclosed in the present invention.

### DETAILED DESCRIPTION

The present embodiments provide a driving component for multi-period modulation and a driving method thereof. The circuit may utilize SDN technology to realize the data configuration of storage units and the programming of circuit logic devices of different devices based on the device code through a remote controller; and using a programmable interconnected sub-module array which are generated in software, the remote controller may realize the output of multi-period modulation driving signals at different clock frequencies in batch. The driving component decouples the original on-chip complex driving signal generation module and divides it into three components, including a state division component, a synchronization multi-period configuration component, and a single-period modulation component. The state division component is used to perform functional decoding according to the function mode, and generate a timing-matched trigger signal according to the specific function mode. The synchronization multi-period configuration component is used to generate multiple types of periodic/non-periodic enable signals at different main frequencies according to the configuration information, so as to realize multi-period timing driving. The single-period modulation component, as a general-purpose modulation unit, each unit can generate a periodic composite on-chip timing driving signal based on the configuration information and multi-period driving signals, so as to meet the driving requirements of different device chips.

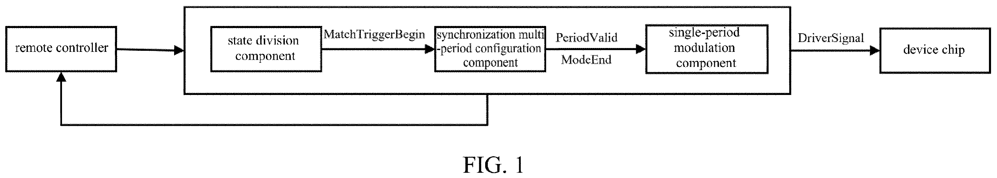

The present embodiment provides a driving method for multi-period modulation, and the step flow chart is shown in FIG. 1 (in FIG. 1, MatchTriggerBegin is a timing-matched trigger signal; PeriodValid is a driving enable signal of a single-period modulation component, which is usually an array; ModeEnd is an end signal of a single-period modulation component, which is usually an array; DriverSignal is the final output driving signal, which is usually an array.

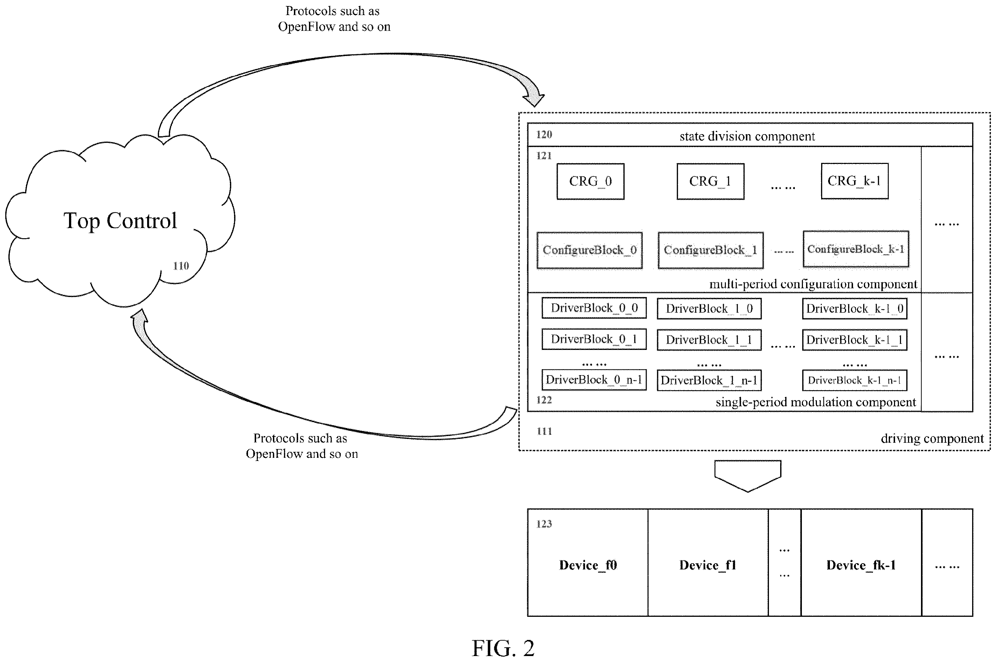

FIG. 2 illustrates a block diagram of the functional configuration and hardware circuit programming of the driving component. By utilizing the communication data interface between the control level and the hardware level implemented by Top Control (e.g., remote controllers, host computers, etc.) through protocols such as OpenFlow, the hardware technicians adapt the transmission data based on the information received from the feedback link to achieve the data configuration of the storage unit and the programming of the circuit logic devices for the different controlled devices. The programmable interconnected sub-module array circuit which is generated in software includes a state division component 120, a synchronization multi-period configuration component 121, and a single-period modulation component 122 connected in sequence. This can satisfy the need for flexible configuration and real-time switching of periodic and aperiodic driving signals for different devices in multiple modes.

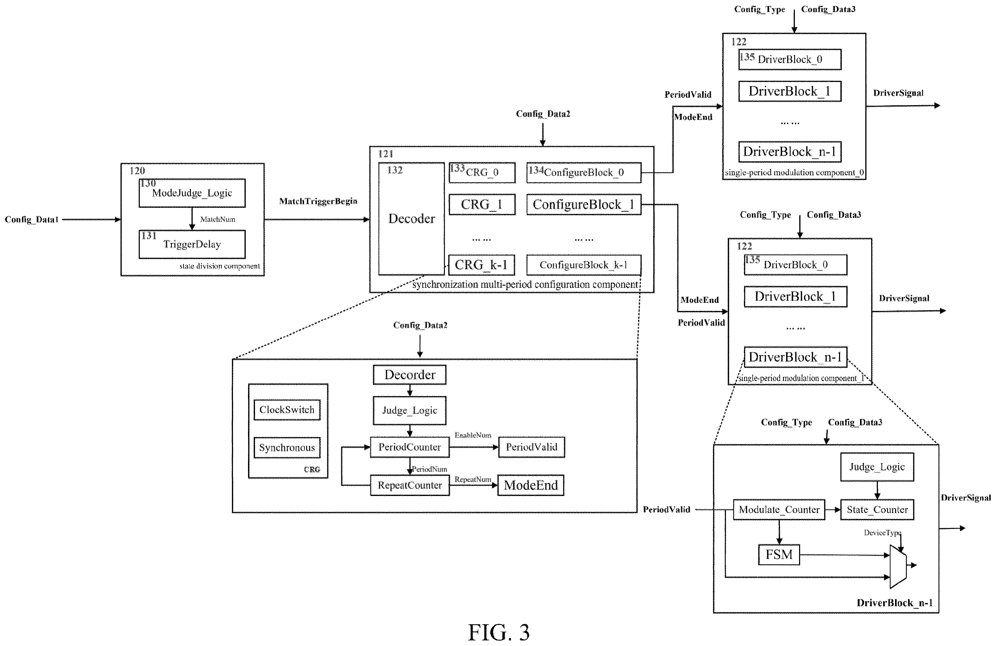

Referring to the block diagram of the functional configuration and the hardware circuit programming of the driving component of FIG. 2, first, the remote controller 110 uses the communicate data interface between the control level and the hardware level through the protocols such as OpenFlow to parameterize the driving component 111 for multi-period modulation (including: a state division component 120, a synchronization multi-period configuration component 121, and a single-period modulation component 122) based on the code information Device_fN (N=0,1, ......, K-1, K is a positive integer) of the controlled device 123. The numerical control circuit of the driving component 111 simultaneously feeds the data back to the remote controller 110 in real-time via a data feedback link to realize flexible and effective configuration of the hardware circuit. Function state decoding is then performed. Referring to FIG. 3, the input of the state division component 120 is the data configuration Config_Data1 signal, the mode judgment logic module 130 (ModeJudge_Logic) performs functional decoding based on the Config_Data1 signal and then carries out a combinational logic judgment and configures a delay storage unit, and the delay value in the configured delay storage unit is expressed by MatchNum, to meet the demand for synchronized triggering between modules in different modes. The trigger delay module 131 (TriggerDelay) starts to work after receiving the request information TriggerBegin signal requesting the controlled device to start up in configuration information Config_Data1 from the outside, and after its built-in counter counts up to MatchNum, it outputs a timing-matched trigger signal MatchTriggerBegin signal with a high level for a duration that is usually at least greater than a predetermined value (such as one clock period), so as to enable the synchronization triggering process to proceed normally. It is to be noted that the duration of the high level of the timing-matched trigger signal MatchTriggerBegin signal does not have to be absolutely higher than one clock period, it may be longer or relatively shorter, as long as the synchronization triggering process can proceed normally.

Then the configuration of the multi-period enable signals is carried out, and the synchronous multi-period configuration component 121 generates multiple types of periodic/non-periodic driving enable signals at different clock frequencies based on the off-chip configuration information, and implements multi-period timing driving simultaneously on-chip. The inputs to the synchronization multi-period configuration component 121 are the MatchTriggerBegin signal and the data configuration information Config _Data2 signal from outside. In the synchronous multi-period configuration component 121, the decoder module 132 (Decoder) decodes based on its data configuration information Config_Data2 and outputs the decoded data to internal sub-modules (e.g., the clock reset generation sub-module 133 (CRG) and the configuration sub-module 134 (ConfigureBlock)) , to perform data configure and selection on the sub-module, while the sub-module which is not selected is in a standby state, wherein the internal k sub-modules realize the generation of driving signals at different main frequencies under the same frequency group; each sub-module performs the combinational logic judgment and configures the enable signal period storage unit (the configured value is expressed by PeriodNum), a high level duration storage unit in a single-period (the configured value is represented by EnableNum) and a single-period repetition number storage unit (the configured value is represented by RepeatNum) based on the off-chip configuration information (e.g., the data configuration information Config_Data2 as mentioned above). The sub-module starts to work after receiving the trigger signal MatchTriggerBegin, the counter PeriodCounter starts to count, and outputs the enable signal PeriodValid with duration of a single period which is PeriodNum and duration of a high level in a single period which is EnableNum. After the counter RepeatCounter counts the single-period repetition number of the enable signal to EnableNum, it outputs the mode end signal ModeEnd; according to the switching enable of the periodic drive and non-periodic drive, it may flexibly control the switching between the periodic drive and non-periodic drive. The output PeriodValid signal is used as the enable signal for the subsequent single-period modulation components, only the selected ConfigureBlock will work, and the unselected ConfigureBlock will be in a standby state. The output ModeEnd signal is the end signal of the working mode of the controlled device, which is fed back to the state division component and output to the single-period modulation component to perform the Clear operation on the storage units in the component and to turn off the output driving signal.

Finally, for single-period driving signal modulation generation, the single-period modulation component 122 may for example exemplify n driving sub-modules 135, all of which operate under the same driving enable signal PeriodValid. The single-period modulation component 122 receives off-chip configuration information Config_Type and Config_Data3, determines the type and timing information of the driving signals by the combinational logic, and configures the corresponding storage units. The n sub-modules operate under the high level of the enable signal PeriodValid, and PeriodValid is modulated by the built-in counter and the sub-state machines into n periodic composite on-chip timing driving signal DriverSignal. The sub-modules have a built-in selector to select modulated or non-modulated outputs according to the device type DeviceType, which finally realizes the timing driving of digital and analog readout units of the controlled device chip.

The specific module block diagram of the numerical control circuit of the driving component provided in this embodiment is shown in FIG 3, in which Config_Data1, Config_Data2, Config_Data3 and Config_Type are off-chip configuration parameters; ModeJudge_Logic is the mode judgement logic module; TriggerDelay is a trigger delay module; MatchNum is the delay value configured in the delay storage unit; MatchTriggerBegin is the timing-matched trigger signal; Decorder is the decoding module; CRG is the clock reset generation sub-module; ConfigureBlock is the configuration sub-module; PeriodValid is the enable signal for the single-period modulation component; ModeEnd is the mode end signal; ClockSwitch is the clock switching module; Synchronous is the synchronizer; PeriodCounter is the period duration counter module; RepeatCounter is the repetition number counter module; PeriodNum is the value configured in the enable signal period storage unit; EnableNum is the value configured in the high level duration storage unit in the single-period; RepeatNum is the value configured in the single-period repetition number storage unit, which can be used to indicate the period repetition number of the enable signal; DriverBlock is the single-period driving sub-module; Judge_Logic is the combinational logic judgment module; Modulate_Counter is the high and low levels delay time counter; State_Counter is the signal flip number counter; FSM is the sub-state machine; DeviceType is the device chip number; DriverSignal is the driving signal.

The state division component includes one digital input signal and one digital output signal, wherein the one digital input signal is the data configuration information Config_Data1 and the one digital output signal is the timing-matched trigger signal MatchTriggerBegin. Wherein the data configuration information Config_Data1 includes the working mode information of the controlled device chip and the configuration parameters in different function modes; the working mode information of the device chip includes the request information TriggerBegin requiring the controlled device chip to start up and the chip working mode information, such as at least one of the gradient mode, grayscale mode, program mode, and color mode; the configuration parameters in different function modes, such as the state duration of at least one of the reset state, the exposure state, the readout state, and the program state and so on. The state division component 120, includes a mode judgment logic module 130 and a trigger delay module 131. The mode judgment logic module 130, based on the off-chip data configuration information Config_Data1, determines the current working mode of the device chip through a combinatorial logic, and configures a delay storage unit based on configuration parameters (such as the value MatchNum therein) in different function modes; The trigger delay module 131 starts working after receiving the request TriggerBegin signal requiring the controlled device to start up, and realizes the generation of the timing-matched trigger signals in different function modes by means of counter counting. After the counter counts up to MatchNum, it outputs the timing-matched trigger signal MatchTriggerBegin for the synchronization multi-period configuration component.

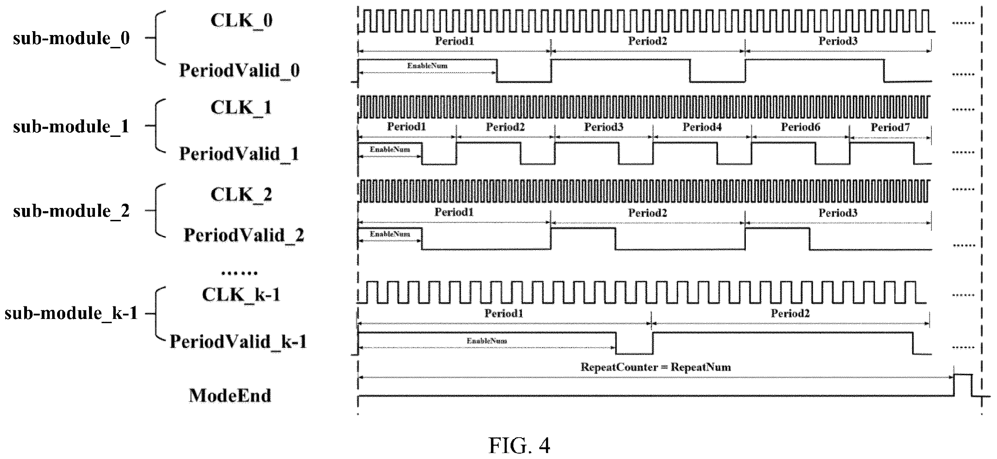

A synchronization multi-period configuration component includes two digital input signals and two digital output signals, wherein the two digital input signals are the trigger signal MatchTriggerBegin and the data configuration information Config_Data2 respectively, and the two digital output signals are a set of driving enable signal PeriodValid and end signal ModeEnd capable of characterizing a plurality of period types of the controlled device chips. The driving enable signal PeriodValid and the end signal ModeEnd are preferentially one-dimensional array signals, but this does not constitute a limitation. Wherein the MatchTriggerBegin signal is a trigger signal that satisfies the timing requirements; wherein the Config_Data2 signal includes the configuration parameters in the corresponding mode, such as at least one of the full sampling, downsampling, windowing, windowing position, and other mode information; information such as the single-period time and the delay time of the high level and so on; switching enable of the periodic drive and the non-periodic drive; sub-module selection information; selection signal of main frequency of a clock. The synchronization multi-period configuration component 121, includes a decoding module 132, k clock reset generation sub-modules 133, and k configuration sub-modules 134, where k is a positive integer. For example, the remote controller may communicate data by employing a plurality of synchronous multi-period configuration components, and the respective components may work independently of each other to achieve generation of driving signals at different clock frequency groups, such as a frequency group of Hz, a frequency group of KHz, and the like. In one synchronous multi-period configuration component, the decoding module 132 configures data and performs a selection for k sub-modules (e.g., the clock reset generation sub-module 133 (CRG) and the configuration sub-module 134 (ConfigureBlock)) based on the data configuration information Config_Data2, and the sub-modules which are not selected are in a standby state. The k clock reset generation sub-modules may flexibly select the working main frequency of the clock for the configuration sub-module and single-period modulation component according to main frequency selection information of the clock, to realize the generation of driving signals at different clock frequencies under the same frequency group. The ClockSwitch module selects the working main frequency according to the main frequency selection information of the clock, and the reset and trigger signals are synchronized by the Synchronous module and inputted into the subsequent configuration sub-module and single-period modulation component. Each of the k configuration sub-modules may be independently configured with different periodic/non-periodic modulation enable signals by the off-chip configuration parameters. ConfigureBlock sub-module includes a combinational logic judgement module and two key counters PeriodCounter and RepeatCounter, wherein the combinational logic judgement module is responsible for configuring the storage unit, and the counters PeriodCounter and RepeatCounter are responsible for driving the period count and period number count respectively. The specific driving process for configuring the sub-module is as follows: the off-chip adjustable Config_Data2 signal is input to the combinational logic judgment module, which based on the configuration parameters in current mode of the device, such as at least one of full sampling, downsampling, windowing, windowing position and other mode information, configures the two counters PeriodCounter and RepeatCounter with the storage enable signal period duration (PeriodNum), high level duration in the period (EnableNum) and period repetition number (RepeatNum) of the key storage unit. RepeatCounter is a line counter, for example, as for the full resolution, this counter needs to count up to n, and as for the down resolution of 2x, this counter needs to count up to n/2; PeriodCounter is the period counter of the signal, and this module will calculate the corresponding period of the driving signal according to the period duration of the enable signal, and when the counter counts up to a predetermined value, it will be cleared to zero and the RepeatCounter will be incremented by one. After the ConfigureBlock module receives the trigger signal MatchTriggerBegin, the PeriodCounter starts to work. PeriodValid signal will be pulled high, and when the counter counts up to the predetermined value EnableNum, PeriodValid signal will be pulled low and continue counting, and when the counter counts up to the predetermined value PeriodNum, the counter will be cleared and RepeatCounter will be incremented by one. The PeriodValid signal will continue throughout the mode operation until the RepeatCounter counts up to RepeatNum. The off-chip input periodic/non-periodic switching enable may control the selection of sub-module driving signals, realizing the flexible switching between periodic driving enable and non-periodic driving enable. The synchronous multi-period configuration component may examplify multiple sub-modules to implement a multi-period type of driving signal PeriodValid as shown in FIG 4.

Referring to FIG 4, the synchronization multi-period configuration component selects the corresponding configuration sub-module's working master frequency of a clock CLK_0, CLK_1...... based on the controlled device's configuration data through multiple CRG modules, and the configuration sub-module achieves the period counting of the period driving enable signal for example Period1, Period2, Period3 ......, using the period counter PeriodCounter, where the high level duration in the period (EnableNum) controls the high level of the driving enable signal, the low level duration is obtained by subtracting the high level duration in the period (EnableNum) from the enable signal period duration (PeriodNum). The period repetition number counter RepeatCounter is responsible for counting the period of the driving enable signal and outputs the end signal ModeEnd when the counter counts up to RepeatNum.

The single-period modulation component includes four digital input signals and one digital output signal. The four digital input signals are the signal type code Config_Type, the timing data configuration information Config_Data3 of the corresponding signal, the driving enable signal PeriodValid and the end signal ModeEnd respectively. The one digital output signal is DriverSignal signal for the composite on-chip timing driving required for the digital and analog readout unit of the controlled device chip. The single-period modulation component 122 includes n driving modulation sub-modules 135, and the single sub-module may be exemplified in batch, and each sub-module may be independently configured by an off-chip configuration parameter to achieve a composite on-chip timing driving in the single-period, where n is the number of driving signals to be generated, and n is a positive integer. DriverBlock sub-module inlcudes a combinational logic judgment module, a sub-state machine FSM, a high/low level delay time counter Modulate_Counter and a signal flip number counter State_Counter. The sub-module configures the corresponding storage unit based on the input signal type code Config_Type, the type of the driving signal generated by the combinational logic judgment and the flip number of high and low levels. The highest bit of the input signal type code Config_Type determines whether the initial level of the driving signal is high or low through the first level of the selector in the combinational judgment logic Judge_Logic; if it is 1, the initial level is high, and if it is 0, the initial level is low; other bits determine the flip numbers of the high and low levels by the second level of the selector in the combinational judgment logic Judge_Logic. The built-in selector of the sub-module may select modulated output or non-modulated output through the device type DeviceType, and ultimately meet the complex driving requirements for the digital and analog readout units of different device chips in different main frequencies of the clock.

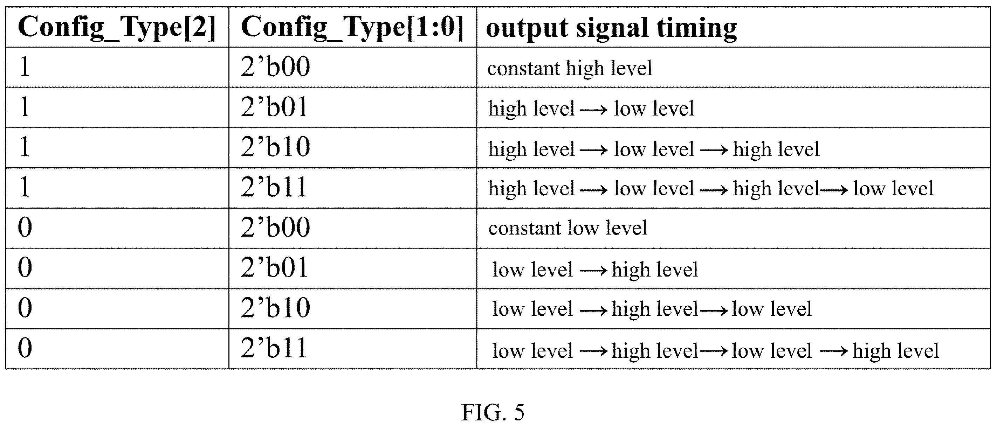

FIG 5 illustrates the modulation truth table of the driving signal in a single period with 4bits as an example. The highest bit of Config_Type determines the initial level, and the rest of the bits determine the flip change of the driving signal. Config_Type is not limited to 4bits, but may be any other multi-bit data. The sub-state machine modulates and generates the driving signal DriverSignal based on the input enable signal PeriodValid and the configured storage unit. After the sub-state machine receives PeriodValid, Modulate_Counter starts counting, the counter is cleared after counting up to a predetermined value, and the state machine outputs the state flip and State_Counter is increased by one, State_Counter counts to a predetermined value and then enters the next period, and the driving signal DriverSignal output from the state machine will last for the whole mode operation phase.

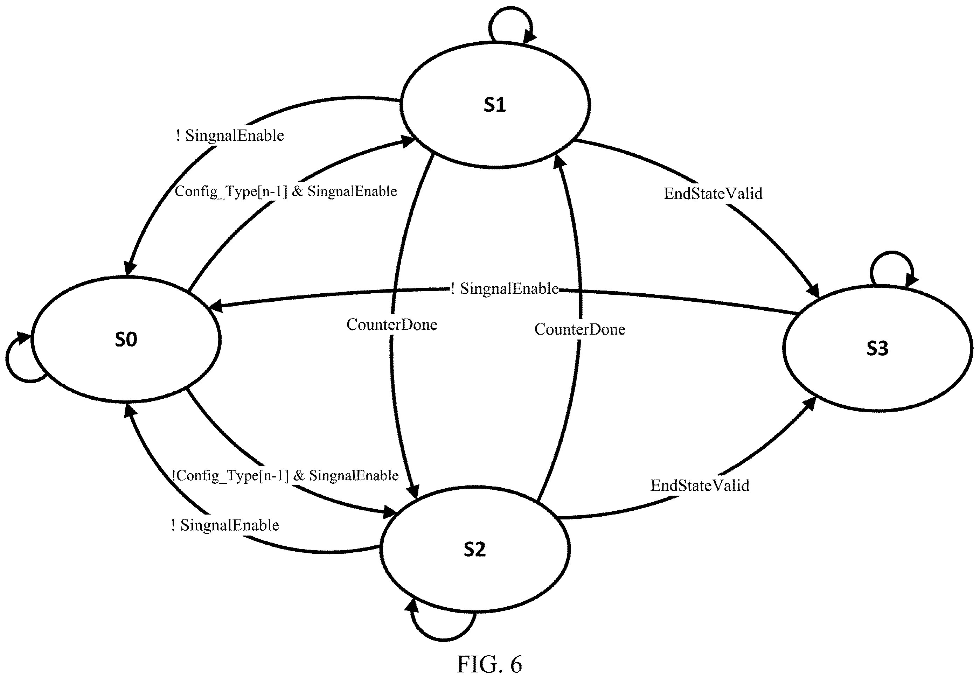

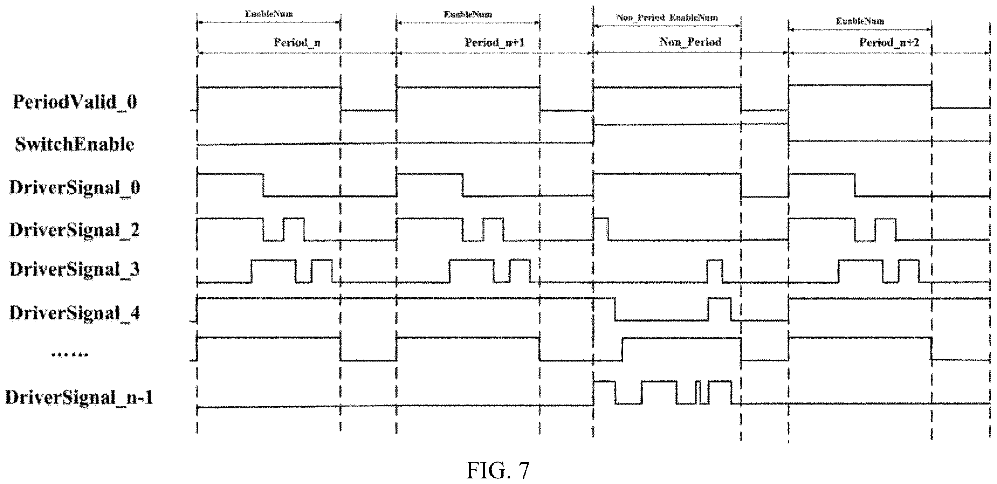

The sub-state machine module described is shown in Fig. 6 and includes four states: S0 (standby state), S1 (high level state), S2 (low level state) and S3 (end state). It is necessary to jump to the corresponding state according to the type of signal and the flip number of the high and low levels, and to realize the period driving signal output with the start level low and 4 flips in the period, it is necessary to realize the state cycle from S0 to S2 to S1 to S2 to S1 to S3, and the generation of the driving signal is shown as DriverSignal2 in Fig. 7; and to realize the period signal switching to a non-period driving signal, the start level of the non-periodic driving signal being high, and the high and low levels being flipped three times, it is necessary to input the switch enable signal SwitchEnable off-chip to realize the state cycle from S0 to S1 to S2 to S1 to S3, and the driving signal is generated as the non-periodic phase of DriverSignal2 in Fig. 7. By inputting the timing data configuration information Config_Data3 of the corresponding signal, the state machine switch trigger signals CounterDone and EndStateValid is generated through the built-in counter of the single-period modulation component, thus realizing the periodic composite on-chip timing driving signal output.

FIG. 7 illustrates a timing diagram of the timing modulation within a single period and periodic/non-period driving signal switching. Referring to FIG. 7, a timing diagram for realizing the generation of a periodic composite on-chip timing driving signal is configured using an enable signal PeriodValid_0 output from a synchronization multi-period configuration component as a driving enable for the single-period modulation component. The single-period modulation component may start working when the enable signal is high level based on the off-chip configuration information Config_Data3 and Config_Type, and modulate the driving enable signal to realize the driving signal DriverSignal of the constant high level, constant low level, and complex timing in a single-period. For example, when Config_Type is 3'b101, the single-period modulation component modulates PeriodValid_0 into DriverSignal_0 driving signal to be output using a sub-state machine based on the high and low levels durations in Config_Data3. When Config_Type is 3'b111, the PeriodValid_0 is modulated to DriverSignal_1 driving signal to be output. Referring to Fig. 7, the single-period modulation component may realize flexible modulation of periodic drive and non-periodic drive based on the off-chip input signal SwitchEnable signal. The driving enable time of the non-periodic drive may be independently configured to output the timing of the DriverSignal_0 driving signal in the non-periodic phase if no modulation is performed, and the timing of DriverSignal_1, DriverSignal_2... in the non-periodic phase if modulation is performed.

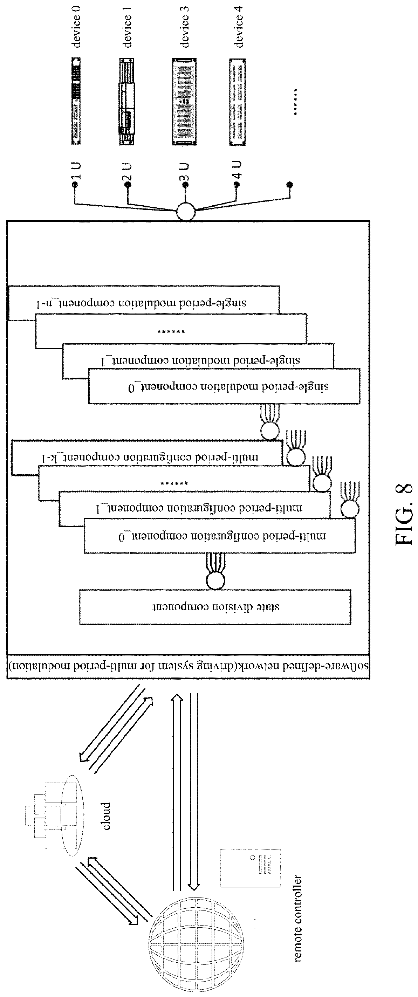

FIG. 8 illustrates a driving system for multi-period modulation. The driving system includes remote controllers (e.g., host computers, etc.), clouds, software-defined networks, and controlled devices. The driving component for multi-period modulation based on SDN technology abstracts the underlying hardware devices as virtualized resource pools, and hardware technicians may use the matching of the communication data interface between the control level and hardware level realized by the remote controller through the cloud or peripheral interfaces, so as to realize the data configuration of storage units and programming of circuit logic devices for different controlled devices. The driving component based on SDN technology includes a state division component, k multi-period configuration components, and n single-period modulation components. Referring to FIG. 8, the one state division component may realize the triggering of the k multi-period configuration components according to the configuration information, and realize the modulation of the delay time of the period enable driving signal and the trigger signal from the outsideperiod in different function modes at different main frequencies of a clock. Referring to FIG. 8, a multi-period configuration component_k-1 may drive n single-period modulation components to generate n modulation driving signals, thereby realizing the driving of a multi-device chip.

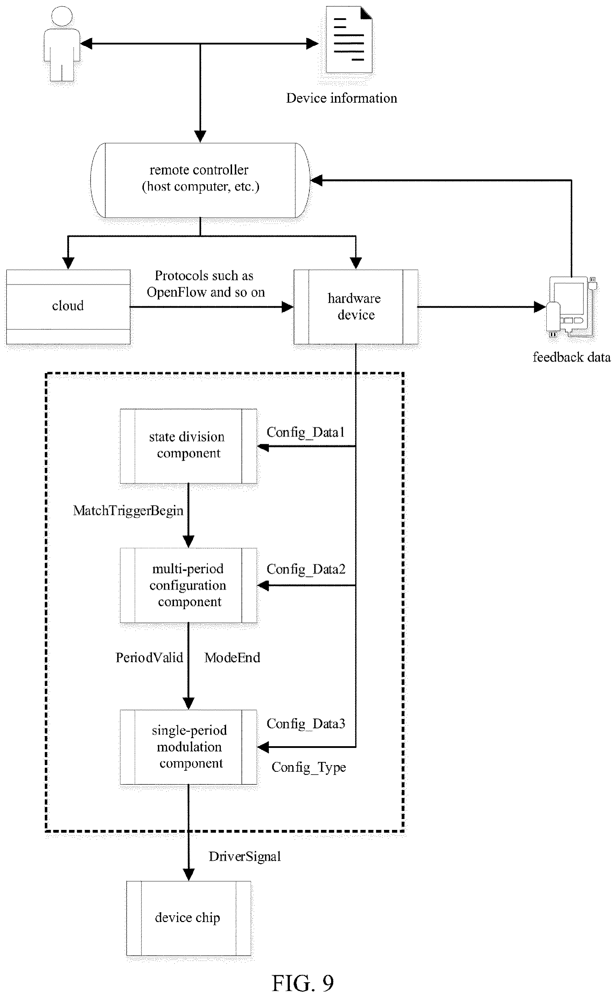

FIG 9 illustrates a driving program (i.e., a computer program product) for multi-period modulation, where based on the driving requirements of different device chips, hardware technicians may utilize the communication between the control level and hardware level achieved by remote controllers through the cloud or peripheral interfaces via protocols such as OpenFlow, adjust the transmission data based on the feedback data received via the feedback link, thereby realizing data configuration (Config_Data1, Config_Data2, Config_Data3 and Config_Type) of the storage units and programming of circuit logic devices for different controlled devices. The software-generated hardware circuit includes a state division component, a synchronization multi-period configuration component, and a single-period modulation component connected in sequence. After the state division component receives the request message TriggerBegin signal requesting the controlled device to start up contained in Config_Data1, the built-in counter starts to operate and outputs the MatchTriggerBegin signal that meets the timing requirements to the synchronous multi-period configuration component. The synchronous multi-period configuration component realizes the timing configuration of the periodic and non-periodic driving signals at a specific main frequency of a clock, and outputs the multi-period driving enable signal PeriodValid and the end signal ModeEnd of the single-period modulation component. Finally, the single-period modulation component modulates the PeriodValid signal using the configuration information, and outputs the complex driving signal of the multi-device chip. The computer program product includes a computer program. The computer program is capable of being executed by a processor to implement the driving method for multi-period modulation as previously described.

## Claims

1. A driving component for multi-period modulation for generating multi-period driving signals for a plurality of controlled devices at a back-end, **characterized in that** the driving component comprises a state division component, a synchronization multi-period configuration component and a single-period modulation component connected in sequence; and
(1) the state division component configured to: modulate request information for startup of the controlled device to satisfy synchronous trigger or asynchronous trigger requirements of a timing; the state division component comprising a mode judgement logic module ModeJudge_Logic and a trigger delay module TriggerDelay and adapted to at least one digital input signal and one digital output signal for functional decoding according to a function mode of the controlled device, and generating a timing-matched trigger signal according to the function mode of the controlled device; wherein the at least one digital input signal is data configuration information Config_Data1, which comprises working mode information of the driving component and configuration parameters in different function modes, wherein the working mode information of the driving component comprises request information TriggerBegin requesting the controlled device to start up, and the configuration parameters in different function modes comprise at least one of duration of a reset state, duration of an exposure state, duration of a readout state, and duration of a program state; the at least one digital output signal is a timing-matched trigger signal MatchTriggerBegin transmitted to the synchronization multi-period configuration component; and
the mode judgement logic module ModeJudge_Logic configured to make a combinatorial logic judgment and configure a delay storage unit (MatchNum) based on data configuration information Config_Data1;
the trigger delay module TriggerDelay configured to realize modulation of delay time of a period enable driving signal and a trigger signal from the outside in different function modes based on configuration information of delay storage unit (MatchNum) and the request information TriggerBegin, and output the trigger signal MatchTriggerBegin which meets timing requirements to the synchronization multi-period configuration component;
(2) the synchronous multi-period configuration component configured to: generate multi-period/non-period driving enable signals based on the configuration information and the trigger signal at working clock frequencies of different controlled devices; the synchronous multi-period configuration component configured to be adapted to at least two digital input signals and at least two digital output signals for generating multiple types of periodic/non-periodic enable signals based on off-chip configuration information, and simultaneously implementing multi-period timing driving on-chip; wherein the at least two digital input signals are the trigger signal MatchTriggerBegin from the state division component and data configuration information Config_Data2 from off-chip, respectively, and the at least two digital output signals are a set of driving enable signal PeriodValid and end signal ModeEnd capable of characterizing a multiple of period types of the chip;
wherein the synchronization multi-period configuration component comprises a decoding module, k clock reset generation sub-modules, and k configuration sub-modules, wherein the decoding module decodes and outputs data obtained from decoding to the k clock reset generation sub-modules and k configuration sub-modules based on the data configuration information Config_Data2, in order to perform data configuration and selection on at least one sub-module of the k clock reset generation sub-modules and k configuration sub-modules; each sub-module of the k clock reset generation sub-modules and k configuration sub-modules is configured to generate different periodic/non-periodic driving enable signal PeriodValid based on off-chip configuration information to realize multi-period enable modulation under the same clock frequency group, wherein k is a number of driving enable signals to be generated, k is a positive integer; the synchronization multi-period configuration component makes a combinational logic judgment and configures corresponding enable signal period storage unit (PeriodNum), high level duration storage unit in a single period (EnableNum) and a single-period repetition number storage unit (RepeatNum) based on data configuration information Config_Data2, realizes timing configuration of periodic and/or non-periodic driving signals by means of counters PeriodCounter and RepeatCounter, and outputs multi-period driving enable signal PeriodValid and end signal ModeEnd for a single-period modulation component, and
(3) the single-period modulation component configured to: modulate and output a composite driving signal required by the controlled device chip based on the configuration information and a driving enable signal; the single-period modulation component adapted to at least four digital input signals and at least one digital output signal; the single-period modulation component generates a periodic composite on-chip timing driving signal to drive a digital and analog readout unit in the controlled device chip based on off-chip signal type code and configuration information as well as the multi-period driving enable signal PeriodValid and end signal ModeEnd; the four digital input signals are signal type code Config_Type, timing data configuration information Config_Data3 for a corresponding signal, a driving enable signal PeriodValid and an end signal ModeEnd, and the one digital output signal is a complex on-chip timing driving signal DriverSignal required by the digital and analog readout unit in the controlled device chip; and,
the single-period modulation component comprises n driving sub-modules responsible for generation of a plurality of complex on-chip timing driving signals, wherein n is a number of driving signals to be generated and n is a positive integer; and
each driving sub-module of the n driving sub-modules comprises a state machine sub-module and a selector, determines type of the driving signal and flip number of high and low levels through combinational logic based on input signal type code Config_Type, generates an on-chip timing driving signal DriverSignal through modulation of state machine sub-module based on an input driving enable signal PeriodValid; based on device code DeviceType in the input timing data configuration information, output of on-chip timing driving signal DriverSignal or output of driving enable signal PeriodValid is realized through the selector.

2. The driving component for multi-period modulation as claimed in claim 1, **characterized in that**,
the digital input signal of the state division component further comprises request information TriggerBegin requesting the controlled device to start up, and an end signal ModeEnd;
the TriggerBegin information is the request information for startup of the controlled device, and the state division component, after receiving the TriggerBegin information, carries out modulation based on data configuration information Config_Data1 to meet synchronous trigger or asynchronous trigger requirements of working timing of the controlled device chip; the end signal ModeEnd is an end signal of working mode of the controlled device, and is fed back to the state division component and output to the single-period modulation component to carry out a clear (Clear) operation on storage unit within state division component and single-period modulation component and to turn off the output driving signal.

3. The driving component for multi-period modulation as claimed in claim 1 or 2, **characterized in that** the storage unit is a register.

4. A driving system for multi-period modulation comprising a plurality of composite periodic processes in operation, **characterized in that** the driving system comprises the driving component for multi-period modulation as claimed in claim 1 or 2 for generating multi-period driving signals for a plurality of controlled devices controlled by the driving system.

5. A driving method for multi-period modulation, **characterized in that** a state division component, a synchronization multi-period configuration component and a single-period modulation component which are connected in sequence are adopted, the state division component comprising a mode judgment logic module and a trigger delay module, and the driving method comprises following steps:
S1, performing function state division: after the state division component receives data configuration information Config_Data1 containing working mode code of the controlled device, corresponding function mode timing and data configuration, the mode judgment logic module is configured to configure a delay storage unit based on the data configuration information Config_Data1, and a delay value in the delay storage unit is denoted as a MatchNum; the trigger delay module is configured to start working upon triggering by a trigger signal based on request message TriggerBegin requesting the controlled device to start up in configuration information Config_Data1 from the outside, and when its built-in counter counts up to MatchNum, it outputs a timing-matched trigger signal MatchTriggerBegin, duration of high level of the MatchTriggerBegin being greater than a predetermined value to enable the synchronized triggering process to proceed normally,
S2, performing configuration of a multi-period enable signal, the synchronization multi-period configuration component, after receiving data configuration information Config _Data2 of the controlled device, performs a combinational logic judgment and configures an enable signal period storage unit, a high level duration storage unit in a single period, and a single-period repetition number storage unit, wherein a value configured in the enable signal period storage unit is denoted as PeriodNum, a value configured in the high level duration storage unit in the single-period is denoted as EnableNum, and a value configured in the single-period repetition number storage unit is denoted as RepeatNum; k sub-modules exemplified by the synchronization multi-period configuration component start to work after receiving the timing-matched trigger signal MatchTriggerBegin, the counter PeriodCounter starts counting, and outputs an enable signal PeriodValid with duration of a single period which isPeriodNum and duration of a high level in a single period which is EnableNum; after counting a single period repetition number of the enable signal to EnableNum, the counter RepeatCounter outputs the end signal ModeEnd, in order to simultaneously realize multi-period driving enable for subsequent k single-period modulation sub-modules in the chip,
S3, performing generation of a modulation signal within a single period; after receiving off-chip configuration information Config_Type and Config_Data3, the single-period modulation component determines type and timing information of driving signal by a combinational logic, and configures corresponding storage units; the n sub-modules exemplified by the single-period modulation component operate under same driving enable signal PeriodValid and operate when the driving enable signal PeriodValid is at a high level, and built-in counter and sub-state machine modulate PeriodValid into an n periodic composite on-chip timing driving signal DriverSignal, in order to realize timing driving of digital and analog readout unit of the controlled device chip.

6. A computer program product comprising a computer program **characterized in that** the computer program when executed by a processor implements a driving method as described in claim 5.
